# EUROPEAN PATENT SPECIFICATION

(11) **EP 0 780 167 B1**
(45) Date of publication and mention of the grant of the patent: **07.06.2000**
(21) Application number: 96309216.8
(22) Date of filing: 17.12.1996
(51) Int. Cl.: B09C 1/10, B09C 1/00, F42D 3/00, A01C 23/00, E21B 43/00

(54) **A method and apparatus for diffusing a chemical solution, a method and apparatus for injecting a liquid, and a method of remedying soil**
Verfahren und Vorrichtung zur Diffusion von einer chemischen Lösung, zur Einspritzung einer Flüssigkeit und Verfahren zur Bodensanierung
Procédé et dispositif pour diffuser une solution chimique, injecter un liquide et procédé de décontamination des sols

(30) Priority: 19.12.1995 JP 33040995; 19.12.1995 JP 33046195
(43) Date of publication of application: 25.06.1997
(73) Proprietor: CANON KABUSHIKI KAISHA, Tokyo (JP)
(72) Inventor: Kuriyama, Akira, Ohta-ku, Tokyo (JP); Kawabata, Yuji, Ohta-ku, Tokyo (JP)
(74) Representative: Beresford, Keith Denis Lewis

(56) References cited:
- DE-A- 3 545 737
- DE-A- 4 001 320
- DE-C- 266 728
- US-A- 4 662 451
- US-A- 5 032 042
- US-A- 5 101 900
- US-A- 5 133 625

## Description

### BACKGROUND OF THE INVENTION

### Field of the Invention

The present invention relates to a method for diffusing a treating agent into soil and an apparatus therefor, as also a method of remedying contaminated soil.

### Related Background Art

A large amount of chemical compounds or chemical products has been produced with the recent rapid progress in technology and science. Since most of these compounds or products did not originally exist in nature, they are hardly decomposed naturally and thus, accumulate in the natural environment resulting in environmental pollution. In particular, land where many people live is readily affected by artificial pollution. Since water circulates through land, atmosphere and hydrosphere, the environmental pollution in land will spread globally. Well-known examples of pollutants in soil or land include organic compounds such as gasoline, organochloric chemicals such as PCB, teratogenic agrichemicals such as dioxin, as well as radioactive compounds. Fuel such as gasoline is commonly stocked in a huge amount in the underground tanks of gas stations etc. Thus, fuel leak from deteriorated or broken tanks into soil is now a serious social problem. Further, organochloric chemicals, e.g. chlorinated aliphatic hydrocarbons such as trichloroethylene and tetrachloroethylene, were once extensively used for cleaning fine parts as well as for dry cleaning, and large scale pollution of soil and ground water due to the leakage of these chemicals has been gradually revealed. Since such organochloric chemicals are teratogenic and carcinogenic to adversely affect the biological world, remediation of the polluted soil or ground water is now an issue to be solved immediately in addition to the isolation of the pollution source.

Methods for remedying soil polluted with these pollutants include, for example, heat treatment of the dug-up soil, vacuum extraction of the contaminant from the polluted soil, and microbial degradation of the pollutant in soil. Although the heat treatment can completely purify the soil, the soil must be dug up so that soil under structures cannot be purified. Moreover, it is unsuitable for large-scale treatment because of the immense costs of digging and heating. Although the vacuum extraction method is a simple and economical remediation method, organochloric compounds in a concentration of several ppm or lower cannot be efficiently removed and this remediation process requires time in annual scale. On the other hand, microbial remediation does not require dig-up of soil, so it can purify the soil under structures, and use of microorganisms of high degradation activity enables short-time remediation. Thus, this economical and effective remediation method has been attracting attention lately.

Conventional methods of remedying contaminated soil by using microorganisms can be classified into those utilizing indigenous microorganisms naturally inhabiting in the soil, and those which utilize foreign microorganisms not naturally inhabiting in the soil. In the former case, generally chemical substances such as nutrients, inducers and oxygen for increasing the degradation activity of the microorganisms are injected into the soil as well as microparticles such as bentonite which stimulate the growth of the microorganism (Japanese Patent Application No. 7-108678). In the latter case, the foreign microorganism is injected into the soil as well as the substances to enhance their biodegradability. For example, USP No. 5,133,625 describes a method in which the injection pressure, flow rate and temperature are measured by using an extendable injection pipe to control the injection pressure, thereby the concentration of microorganisms and that of nutrients in the soil, to carry out remediation of soils efficiently.

U. S. Patent No. 5,133,625 discloses a method for efficiently remedying soil using an extensible injection pipe through which the injection pressure, flow rate, and temperature can be determined to control the injection pressure, thus to control the concentrations of microbes and nutrients in the soil. U. S. Patent Nos. 4,442,895 and 5,032,042 disclose a method of effective *in situ* microbial remediation of polluted soil, where cracks are formed in the soil using a liquid or a gas injected into the soil with pressure from an injection well. U. S. Patent No. 5,111,883 discloses a method for injecting chemicals vertically or horizontally into a limited region of the soil by setting the relative position of the injection and extraction wells.

Injection of a pollutant-decomposing microorganism, nutrients, an inducer, oxygen, and other chemicals into the soil is considered to be essential for the microbial remediation of polluted soil. However, according to the conventional injection methods, an extremely large amount should be injected to remedy a wide area, since the liquid agent is injected from the injection element to fill the soil pore space. Such a process increases the processing period, labor and material costs, resulting in increased remediation expenses. Differing from chemicals, microorganisms can spontaneously grow and multiply when certain growth conditions such as nutrient are satisfied. If a liquid agent containing the microorganism and nutrient can be injected in an amount as small as possible into a wide area of soil and the microorganism can grow in the soil to decompose pollutants, the remediation expenses is considerably decreased. However, when the necessary amount of the microorganism and nutrient is injected into a wide area after dilution, the processing period and labor required for injection do not decrease. Further, such a method that the liquid agent will fill most of the soil pore space may cause soil fluidization and soften the ground with a high possibility, it cannot be applied to the soil under heavy structures. Moreover, the liquid agent injected into the soil penetrates into the deeper layers and diffuses into underground streams. Therefore, mobile microorganisms and nutrients will not remain within the desired area and lost. Thus, reinjection is required, making it difficult to remedy soil at a low cost. Further, the runoff of the microorganism and nutrient may cause secondary environmental pollution. Consequently, in microbial soil remediation, it is required a method for injecting using a small amount of the agent into a wide area of soil without filling all the pore space of the soil.

For example, German Patent 4001320A1 describes a method for diffusing into soil a substance which can activate microorganisms, wherein a cartridge composed of an explosive directly coated with the activation substance is buried into the contaminated soil and ignited. The blast, however, is basically generated by the combustion reaction of the explosive which raises the ambient temperature to cause thermal expansion of the air around the explosive. Accordingly, the substance for activating the microorganisms might be modified or the microorganisms themselves might be debilitated or killed by the heat.

### SUMMARY OF THE INVENTION

The present invention has been made in view of the above-mentioned problems, and its objective is to provide an effective method for diffusing a treating agent into soil and an apparatus therefor.

In accordance with a first aspect of the invention, there is provided a method for diffusing into a soil a treating agent comprising a microorganism or a microorganism in combination with a nutrient therefor, the method comprising the steps of:
providing a diffusion element comprising an explosive as an igniter and a gas-generating agent coated with the treating agent, the treating agent being of solidified form, the igniter being provided in the gas-generating agent so as not to directly contact the solidified treating agent;
evolving a gas from the gas-generating agent by igniting the igniter, and
diffusing the solidified treating agent into the soil, wherein the gas generating agent has a combustion temperature of circa 176°C (350°F), and the gas-generating agent comprises a metal azide and an oxidizing agent, the metal azide being selected from a group consisting of alkali metal azides, alkaline earth metal azides and aluminum azide, and an oxidizing agent being selected from a group consisting of Feₒ3, NiO₂ and CuO, or azidocarbonamide and an oxyhalogenated acid salt selected from a group consisting of potassium chlorate, sodium chlorate, potassium bromate and sodium bromate, the microorganism remaining viable after the diffusing.

In accordance with a second aspect of the invention, there is provided an apparatus for diffusing into a soil a treating agent comprising a microorganism or a microorganism in combination with a nutrient therefor, comprising a pair of explosion-proof plates between which an explosive as an igniter and a gas-generating agent coated with said treating agent are provided, wherein:
the treating agent is of solidified form, and the igniter is provided in the gas-generating agent so as not to directly contact the treating agent, wherein the gas-generating agent has a combustion temperature of circa 176°C (350°F), and the gas generating agent comprises a metal azide and an oxidizing agent, the metal azide being selected from a group consisting of alkali metal azides, alkaline earth metal azides and aluminum azide, and an oxidizing agent being selected from a group consisting of Feₒ₃, NiO₂ and CuO, or azidocarbonamide and an oxyhalogenated acid salt selected from a group consisting of potassium chlorate, sodium chlorate, potassium bromate and sodium bromate.

In accordance with a third aspect of the invention, there is provided a method of remedying a soil contaminated with a contaminant, comprising the steps of:
providing a gas-generating compound surrounded by a treating agent comprising a solidified microorganism capable of degrading the contaminant, which microorganism is provided alone or in combination with a solidified nutrient for the microorganism capable of degrading the contaminant, the gas generating compound containing an explosive as igniter which is embedded in the gas-generating compound so as not to directly contact the solidified treating agent;
evolving a gas from said gas-generating agent by igniting the explosive and diffusing the solidified treating agent into the soil; and
degrading the contaminant with the microorganism, wherein the gas-generating agent has a combustion temperature of circa 176°C (350°F), and the gas-generating agent comprises a metal azide and an oxidizing agent, the metal azide being selected from a group consisting of alkali metal azides, alkaline earth metal azides and aluminum azide, and an oxidizing agent being selected from a group consisting of Fe₂0₃, NiO₂ and CuO, or azidocarbonamide and oxyhalogenated acid salt selected from a group consisting of potassium chlorate, sodium chlorate, potassium bromate and sodium bromate, the microorganism remaining viable after the diffusing.

### BRIEF DESCRIPTION OF THE DRAWING

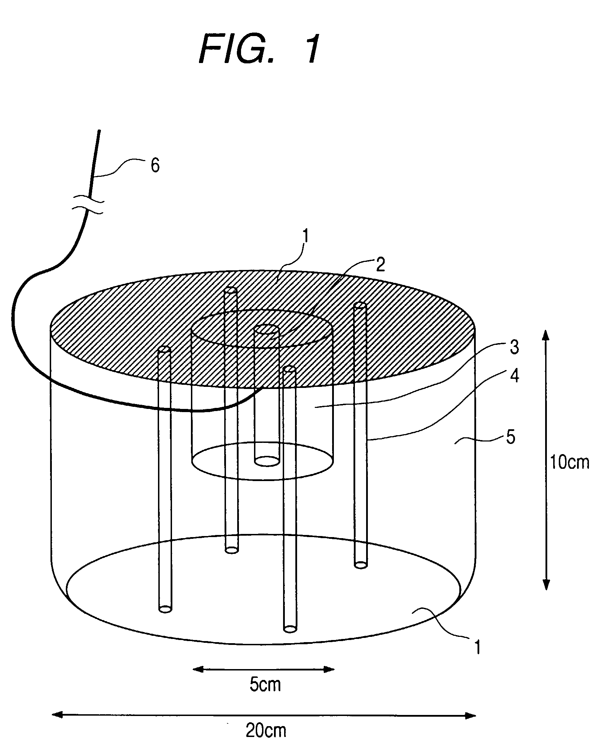

FIG. 1 is a schematic sectional view of a treating agent diffusing apparatus according to an embodiment of the present invention.

### DETAILED DESCRIPTION OF A PREFERRED EMBODIMENT

This embodiment is based on a finding that, when a solidified treating agent containing a microorganism, nutrients and the like is scattered from an injection port of the injection element into soil using a high-pressure gas generated from a gas-generating agent as a propulsive force, the injected microorganism etc. can be injected at an increased speed from the injection port without increasing the volume of the agent, where the microorganism and/or a growth-stimulating substance are not affected by the gas evolved from the gas-generating agent, since the gas temperature is lower than that of the explosion gas of the explosive.

When a liquid agent containing microorganisms and nutrients and the like is injected under pressure into soil, the area wherein the solution can be injected is mostly decided by the water permeation coefficient of the soil and the amount of the solution injected. For example, in the case of sand layer having a large water permeation coefficient, the injected liquid agent spreads almost spherically from the injection point filling the voids of the soil, finally in a form of sphere the size of which is decided by the amount of the injected solution and the porosity of the soil, while a part of the solution falls down spontaneously due to its own weight. In the case of loam layer having a smaller water permeation coefficient, the injected liquid agent spreads in a vein-like form along the weaker soil structure. In both cases, the injected flow is distributed to the dendroidal flow ends, thus the migration speed of the liquid agent in the end quickly drops in the end. Accordingly, in order to prevent the migration speed from lowering, it is necessary to raise the injection speed of the liquid agent at the injection port. But, simply raising the injection speed leads to the increase of an amount of the solution to be injected, resulting in a problem such as liquefaction of the ground. Thus, it is necessary not to increase the injection amount.

In order to increase the injection speed without increasing the injected amount, the pressure of a high-pressure gas can be utilized. As a source of a high-pressure gas, there are gas-generating agents which evolve a gas such as nitrogen in a drastic chemical reaction initiated by heat or a small amount of an explosive. Examples of the gas-generating agent include those mainly composed of a metal azide and an appropriate oxidizing agent, or a nitrogen-containing substance such as azodicarbonamide and an oxyhalogenic acid salt including chlorates and bromates such as potassium chlorate, sodium chlorate, potassium bromate and sodium bromate. These gas-generating agents have a combustion temperature, illustratively around 350°F (176°C), lower than that of the ordinary explosive e.g. 1500°F (815°C). Accordingly, the microorganism and the substance such as nutrients are less affected in the diffusion process by such a gas-generating agent.

Examples of an igniter for such a gas-generating agent include a commonly used agent such as propellants, boron niter, magnesium Teflon, and blasting powder. When such an igniter is ignited, the gas-generating agent is ignited to produce a gas such as nitrogen, and thereby the microorganism and nutrients, inducers etc. are diffused in the soil.

Illustrative examples of a gas-generating agent comprising a metal azide and an appropriate oxidizing agent are those composed of at least one compound selected from alkali metal azides, alkaline earth metal azides and aluminium azide, and a metal oxide such as Fe₂O₃, NiO₂, and CuO. For example, the gas-generating reaction of an agent containing sodium azide and Fe₂O₃ is represented by the following formula. ${\text{6NaN}}_{\text{3}} {\text{+ Fe}}_{\text{2}} {\text{O}}_{\text{3}} {\text{→ 2Fe + 3Na}}_{\text{2}} {\text{O + 9N}}_{\text{2}} \text{↑}$${\text{4NaN}}_{\text{3}} {\text{+ Fe}}_{\text{2}} {\text{O}}_{\text{3}} {\text{→ (Na}}_{\text{2}} {\text{O)}}_{\text{2}} {\text{FeO + 6N}}_{\text{2}} \text{↑}$

When an explosive is used as an igniter for a gas-generating agent, it is preferable that the microorganism and the nutrient to be diffused, are not directly touched by the blast from the explosive. For example, in a constitution wherein the explosive is contained in a gas-generating agent, and the gas-generating agent is coated with a solidified treating agent, that means a layer of the gas-generating compound is provided between the explosive and the solidified treating agent, the blast from the explosive does not directly touch the solidified agent and the microorganism contained in the solidified treating agent can be prevented from being killed or debilitated, and the deterioration of nutrients etc. can be controlled as well.

An effective method for solidifying the treating agent is gelation of the treating agent or kneading it into clay. This solidification of the treating agent dispenses with a mechanism to store a liquid in an injection apparatus and to scatter it in all directions, thereby the apparatus can be simplified as well.

According to the method in which a solidified treating agent is scattered and injected in the soil by a high-pressure gas, almost all the voids in the soil are not filled with the treating agent. The solidified treating agent can be injected and distributed in a large area of the soil, leaving the gas-filled voids in the soil. That means, the injection treatment can be carried out without increasing the water content of the soil after the injection to saturation, thus the downward moving of the treating agent due to its own weight hardly occurs. Therefore, the loss of the microorganism and nutrients is small with less opportunity of secondary pollution. This method makes cracks in the ground, soil or clay of high consolidation, so that oxygen and nutrient can be more easily supplied to the microorganisms. Use of the gas-generating agent also dispenses with such an instrument as a high pressure compressor or a high pressure gas bomb at the treatment site.

The effective blast pressure should be from 2 to 500 atmospheres, although it depends on the conditions of the object soil. If it is 2 atmospheres or lower, the treating agent cannot be fully injected, and if it is 500 atmospheres or higher, various problems will arise by high pressure, including deterioration of the injected treating agent, damage of the injection apparatus, and disturbance of the soil.

One example of a treating agent injection apparatus is shown in FIG. 1. The injection apparatus comprises explosion-proof plates 1, explosive 2 for ignition, a gas-generating agent 3 for high pressure gas evolution, four pillars 4 connecting the upper and lower explosion proof plates 1, a treating agent 5, and an electric wire 6 for igniting the explosive. The upper and lower explosion-proof plates 1 make the solidified treating agent diffuse in horizontal directions preventing it from spouting to the soil surface from the dug and weakened ground with the blast at the explosion, and they are illustratively robust iron plates. The treating agent was solidified, for example into gel, so that it is not deteriorated by high temperature and high pressure due to the explosion. This injection apparatus is buried at a necessary depth and the explosive is ignited to generate a gas, then the solidified treating agent is blown off so that the treating agent is injected into the soil.

### EXAMPLES

The present invention will be further illustrated with the following examples but these examples are not to be construed to limit the present invention.

### Example 1

A treating agent diffusion apparatus shown in FIG. 1 was prepared, in which two iron discs 1 having a diameter of 20 cm and a thickness of 5 mm were connected with 4 pillars 4 so that the discs became parallel each other allowing a 10 cm disc spacing. A gas-generating agent 3 comprising 69 % by weight of sodium azide and 31 % by weight of Fe₂O₃ was molded into a pellet having a diameter of 5 mm, and a height of 5 mm by a hydraulic tablet compressing machine under the pressure of 60 kg/cm². An igniting device for gas-generating agent, which comprises an igniting heater and a smokeless powder (IMR4895, available from IMR Explosive Manufacturing Company) and wrapped in a polyethylene film and made into a cylindrical form, was buried at the center of the pellet and the pellet was coated with a gelled treating agent 5 containing fluorescein to provide a triple structure. This was disposed between the two iron plates of the above-mentioned diffusion apparatus.

The volume of the gel was about 3000 cm³ and 2 % agarose having a low melting point (Sea Plaque GTG Agarose available from Takara Standard Co., Ltd., having a gelling temperature of about 25°C) was used for it. Fluorescein was mixed in an amount of 0.01 M (3.89 mg/cm³).

This injection apparatus was installed in a model test soil comprising fine sand packed in a concrete container of five meters cubic (the average water content of the fine sand was 13 %) at a location about 4 m deep from the surface, then the container was filled with the sand again and an electric current was applied to the wire 6 so that the temperature of the ignition was raised to 180°C or higher to ignite the gas-generating agent to generate gas, and the gelled creating agent was diffused and injected.

About 10 minutes later, the ground was bored at 4 sites 4 m deep at a distance of 25 cm, 30 cm, 40 cm, 60 cm, and 100 cm from the center of the injection apparatus, and at a distance of 350 cm from the center of the injection apparatus, which was regarded as the site wherein no agent was diffused. From each sampling point, 7 g of the soil was collected without disturbing the soil, and 5 g of the soil was used for measuring the density.

One gram of the sample soil was dispersed in water, and exposed to ultraviolet rays and the presence of the fluorescence was checked. The average value of the soil density and the presence/absence of the fluorescence at each site are shown in Table 1.

It is clear from the results that the treating agent can be diffused to the distance of about 100 cm, by the use of the treating agent injection apparatus provided with the gas generator. To the distance of about 60 cm, the soil density was reduced by the blast and this allows us to assume that the voids of the soil were increased and oxygen could be more easily supplied for the growth and metabolism of the diffused microorganisms.

### Example 2

A treating agent diffusing apparatus similar to that of Example 1 was prepared and a solidified creating agent having a triple structure which was similar to that used in Example 1 was provided between the two iron plates of the apparatus for diffusion. As the solidified treating agent to coat the outside of the gas-generating agent pellet 3, a clay-like material produced by kneading a fluorescein fluorescent dye of the same amount as that used in Example 1, with bentonite (available from Hojun-yoko, under the commercial name of Bengel FW) was used.

This apparatus was set at 4 m deep in the test soil as in Example 1, then the container was filled with the sand again and an electric current was applied to the wire 6 so that the temperature of the ignition heater was raised to 180°C or higher to ignite the gas generating agnet to generate a gas, and to diffuse and inject the clay-like agent.

About 10 minutes later, the soil was collected in the same manner as that used in Example 1 and the density of the soil and the presence/absence of the fluorescence were determined. The results are shown in Table 1.

The results show that the gelled treating agent and the solid obtained by kneading the treating agent with bentonite had nearly the same results.

### Comparative Example 1

A treating agent diffusing apparatus similar to that used in Example 1 was prepared except that a gas-generating agent was not used, smokeless powder (IMR4895, available from IMR Explosive Manufacturing Company) 10 times as much as that used in Example 1 was coated with a clay-like material which was obtained by kneading fluorescein of the same amount as used in Example 1 and bentonite (available from Hojun-yoko, under the commercial name of Bengel FW) to provide a double layer structure.

The apparatus was installed in the model soil which was similar to that used in Example 1, at a location about 4 m below the surface and buried. Then an electric current was applied to the wire 6 so that the temperature of the ignition heater was raised to 180°C or higher, to explode the explosive, and the clay-like material was diffused and injected.

About 10 minutes later, the soil was collected in the same manner as in Example 1, and the density of the soil and the presence/absence of the fluorescence were determined. The results show, as given in Table 1, that the fluorescein could not observed at a site 30 cm or more away from the apparatus in Comparative Example 1, and the decrease in the soil density was smaller than those in Example 1 and Example 2. Therefore, the soil density was affected less than in Example 1 where the gas-generating compound was used, although in Comparative Example 1 the explosive was used in an amount 10 times as much as that used in Example 1.

Also, it seems that a considerable amount of fluorescein was decomposed by the heat of the blast of the explosive.

**Table 1**

| Presence/Absence of fluorescence and average soil density at each site | | | | | | |
|---|---|---|---|---|---|---|
| | **Presence/Absence of fluorescence** | | | **Density (g/cm**^{**3**}**)** | | |
| **Distance from the Apparatus (cm)** | **Example 1** | **Example 2** | **Comparative Example 1** | **Example 1** | **Example 2** | **Comparative Example 1** |
| **25** | **Present** | **Present** | **Present** | **1.11** | **1.10** | **1.14** |
| **30** | **Present** | **Present** | **Absent** | **1.12** | **1.12** | **1.18** |
| **40** | **Present** | **Present** | **Absent** | **1.13** | **1.14** | **1.22** |
| **60** | **Present** | **Present** | **Absent** | **1.18** | **1.19** | **1.22** |
| **100** | **Present** | **Present** | **Absent** | **1.23** | **1.23** | **1.23** |
| **350** | **Absent** | **Absent** | **Absent** | **1.23** | **1.23** | **1.23** |

### Example 3

An apparatus similar to that used in Example 1 was prepared except that the gel contains a trichloroethylene decomposing bacterium strain J1 (Deposit Number in National Institute of Bioscience and Human-Technology, Agency of Industrial Science and Technology: FERM BP-5102) which is known to produce a colony on a phenol glutamate agar medium shown in Table 2 at 30°C in about 20 hours, at a concentration of 10⁹ cells/cm³ instead of the fluorescent dye. The apparatus was buried 4 m below the surface of the model soil in a manner similar to that used in Example 1, and the explosive was ignited and the treating agent was diffused and injected.

About 10 minutes later, 1 g of the soil was collected in a manner similar to that used in Example 1 and it was dispersed in sterilized diluting water, and applied onto a phenol glutamic acid agar medium and allowed to stand in a thermostatic chamber at 30°C for about 20 hours and the number of the colonies was counted. Lysozyme was added to the remaining solution to lyse the bacteria in the soil and DNA was purified and recovered, then PCR was carried out by using primers which react only with DNA of strain J1 to carry out DNA amplification to detect the presence of J1 cells.

The results are shown in Table 3.

These results show that the bacteria can be diffused to the site of about 60 cm by the use of the treating agent diffusing apparatus employing the gas-generating agent. Furthermore, since the J1 was detected by colony formation on the plate, it was confirmed that the bacterium was not inactivated during the diffusion.

**Table 2**

| Phenol glutamate agar medium composition | |
|---|---|
| ×10 M9 Inorganic Culture Medium | 20 ml |
| Sodium Glutamate | 0.4 g |
| Phenol | 20 µl |
| H₂O | 180 ml |
| Agar | 2.4 g |

### Comparative Example 2

A treating agent diffusing apparatus similar to that used in Comparative Example 1 was prepared and a smokeless powder of the same amount as that used in Comparative Example 1 was prepared between two iron plates of the diffusion apparatus, then the outside of the explosive was further coated with a gel containing the same amount of strain J1 as that used in Example 2 to provide a double structure. Then it was installed in the model soil similar to that used in Example 2 about 4 m below the surface and covered with the sand and electric current was applied to the wire 6 so that the temperature of the ignition heater was raised to 180°C or higher to explode the explosive and the clay-like treating agent was diffused and injected.

About 10 minutes later, the soil was collected in the manner similar to that of Example 2, the measurement of the viable number of the bacterial cells and the detection of strain J1 DNA were carried out using an agar medium and PCR.

The results show that DNA of strain J1 could be detected up to the distance of 40 cm, however, the colonies grown on the plate were only those of up to 30 cm, and the viable number was very much smaller than the number of the cells originally put in the apparatus. This suggests that the high temperature and high pressure during the explosion killed the microorganism, even though the DNA was not decomposed.

**Table 3**

| Presence/Absence of strain J1 DNA and average value of the number of bacteria at each site | | | | |
|---|---|---|---|---|
| | **Detection of DNA** | | **Bacterial Number (cells/g soil)** | |
| **Distance from the Apparatus (cm)** | **Example 3** | **Comparative Example 2** | **Example 3** | **Comparative Example 2** |
| **25** | **Present** | **Present** | **1×10**^{**7**} | **9×10**^{**3**} |
| **30** | **Present** | **Present** | **7×10**^{**6**} | **5×10**^{**3**} |
| **40** | **Present** | **Present** | **1×10**^{**6**} | **0** |
| **60** | **Present** | **Absent** | **5×10**^{**5**} | **0** |
| **100** | **Present** | **Absent** | **9×10**^{**4**} | **0** |
| **350** | **Absent** | **Absent** | **0** | **0** |

### Example 4

A concrete container was filled with a model test soil (average water content of 13 %, porosity of 0.30) in a similar way to that of Example 1, and the surface was covered with a Teflon sheet. A trichloroethylene aqueous solution was injected to the lower part of the model soil and left for about one week to provide contaminated soil having the trichloroethylene concentration of 10 µg/g soil.

Then strain J1 was grown to 10⁹ cells/cm³, and subjected to centrifugation to remove the culture medium, and the microorganisms were suspended again in an aqueous solution containing 1 % yeast extract, 2 % of sodium lactate, and 1000 ppm of phenol in an amount of 1/10 equivalent of the removed culture medium, to provide a treating agent for injection. The injection solution of 300 cm³ was mixed with 3000 cm³ of a molten agarose gel having a low melting point, at about 35°C, then it was poured into an injection apparatus similar to that of Example 1 and left to stand at room temperature so that the gel was solidified. The apparatus was buried 4 m below from the surface, the explosive was ignited to generate the gas and the treating agent was diffused and injected into the soil.

Two days later, the model test soil was bored, and the soil was sampled in 4 horizontal directions extending radially from the injection site (two pairs of opposite directions) and the trichloroethylene concentration in each sample was measured by gas chromatography. The results showed that the trichloroethylene concentration in an area within about 50-cm radius from the center of the injection pipe was reduced to about 1 µg/g soil. Accordingly, it was found that the microorganism solution can be extensively injected maintaining the decomposition activity and remediation of soil over a wide region can be efficiently carried out by the use of a treating agent diffusing apparatus using a gas-generating agent.

## Claims

1. A method for diffusing into a soil a treating agent (5) comprising a microorganism or a microorganism in combination with a nutrient therefor, said method comprising the steps of:
providing a diffusion element (1-6) comprising an explosive as an igniter (2) and a gas-generating agent (3) coated with said treating agent, said treating agent being of solidified form, said igniter being provided in said gas-generating agent so as not to directly contact said solidified treating agent (5);
evolving a gas from said gas-generating agent (3) by igniting the igniter (2), and
diffusing said solidified treating agent (5) into the soil, wherein said gas generating agent (3) has a combustion temperature of circa 176°C (350°F), and said gas-generating agent (3) comprises a metal azide and an oxidizing agent, said metal azide being selected from a group consisting of alkali metal azides, alkaline earth metal azides and aluminum azide, and an oxidizing agent being selected from a group consisting of Fe₂O₃, NiO₂ and CuO, or azidocarbonamide and an oxyhalogenated acid salt selected from a group consisting of potassium chlorate, sodium chlorate, potassium bromate and sodium bromate, said microorganism remaining viable after said diffusing.

2. A method according to claim 1, wherein said treating agent (5) is one that has been solidified by gelling.

3. A method according to claim 1, wherein said treating agent (5) is one that has been solidified by mixing with clay.

4. A method according to claim 1, in which the diffusion element comprises a pair of explosion-proof plates (1) which are linked (4) to each other, said igniter (2), gas-generating agent (3) and treating agent (5) being disposed between said explosion-proof plates (1).

5. A method of remedying a soil contaminated with a contaminant, comprising the steps of:
providing a gas-generating compound (3) surrounded by a treating agent (5) comprising a solidified microorganism capable of degrading the contaminant, which microorganism is provided alone or in combination with a solidified nutrient for said microorganism capable of degrading the contaminant, said gas generating compound containing an explosive as igniter which is embedded in said gas-generating compound so as not to directly contact said solidified treating agent;
evolving a gas from said gas-generating agent by igniting said explosive and diffusing said solidified treating agent into the soil; and
degrading the contaminant with said microorganism, wherein said gas-generating agent (3) has a combustion temperature of circa 176°C (350°F), and said gas-generating agent comprises a metal azide and an oxidizing agent, said metal azide being selected from a group consisting of alkali metal azides, alkaline earth metal azides and aluminum azide, and an oxidizing agent being selected from a group consisting of Fe₂0₃, NiO₂ and CuO, or azidocarbonamide and oxyhalogenated acid salt selected from a group consisting of potassium chlorate, sodium chlorate, potassium bromate and sodium bromate, said microorganism remaining viable after said diffusing.

6. A method of remedying soil according to claim 5, in which the contaminant is phenol.

7. A method of remedying soil according to claim 5, in which the contaminant is an organochloric compound.

8. A method of remedying soil according to claim 7, in which the organochloric compound is trichloroethylene.

9. An apparatus for diffusing a treating agent into soil, comprising a pair of explosion-proof plates (1) and, provided between the plates, an explosive as an igniter (2) and a gas-generating agent (3) coated with a treating agent (5) comprising a microorganism or a microorganism in combination with a nutrient therefor, wherein:
said treating agent (5) is of solidified form, and the igniter (2) is provided in the gas-generating agent (3) so as not to directly contact the treating agent (5), wherein the gas-generating agent (3) has a combustion temperature of circa 176°C (350°F), and the gas generating agent (3) comprises a metal azide and an oxidizing agent, the metal azide being selected from a group consisting of alkali metal azides, alkaline earth metal azides and aluminum azide, and an oxidizing agent being selected from a group consisting of Fe₂O₃, NiO₂ and CuO, or azidocarbonamide and an oxyhalogenated acid salt selected from a group consisting of potassium chlorate, sodium chlorate, potassium bromate and sodium bromate.

## Patentansprüche

1. Verfahren zur Verteilung eines Behandlungsmittels (5) in einem Boden, das einen Mikroorganismus oder einen Mikroorganismus in Kombination mit einem Nährstoff für ihn umfaßt, wobei das Verfahren die nachstehenden Schritte umfaßt:
Bereitstellung eines Verteilungselementes (1-6), das einen Explosivstoff als Zünder (2) und ein Mittel (3) zur Erzeugung eines Gases, das mit dem Behandlungsmittel überzogen ist, umfaßt, wobei das Behandlungsmittel in verfestigter Form vorliegt und der Zünder so in dem Mittel zur Erzeugung eines Gases angeordnet ist, daß er nicht in direktem Kontakt mit dem verfestigten Behandlungsmittel (5) steht;
Freisetzung eines Gases aus dem Mittel (3) zur Erzeugung eines Gases durch Zünden des Zünders (2), und
Verteilen des verfestigten Behandlungsmittels (5) im Boden, wobei das Mittel (3) zur Erzeugung eines Gases eine Verbrennungstemperatur von ca. 176 °C (350 °F) aufweist und das Mittel (3) zur Erzeugung eines Gases ein Metallazid und ein Oxidationsmittel, wobei das Metallazid aus der Gruppe ausgewählt ist, die aus Alkalimetallaziden, Erdalkalimetallaziden und Aluminiumazid besteht, und das Oxidationsmittel aus der Gruppe ausgewählt ist, die aus Fe₂O₃, NiO₂ und CuO besteht, oder Azidocarbonamid und ein Salz einer Sauerstoffhalogensäure umfaßt, das aus der Gruppe ausgewählt ist, die aus Kaliumchlorat, Natriumchlorat, Kaliumbromat und Natriumbromat besteht, wobei der Mikroorganismus nach der Verteilung lebensfähig zurückbleibt.

2. Verfahren nach Anspruch 1, in dem das Behandlungsmittel (5) ein Behandlungsmittel ist, das durch eine Gelbildung verfestigt wurde.

3. Verfahren nach Anspruch 1, in dem das Behandlungsmittel (5) ein Behandlungsmittel ist, das durch Mischen mit Ton verfestigt wurde.

4. Verfahren nach Anspruch 1, in dem das Verteilungselement ein Paar explosionssicherer Platten (1), die miteinander verbunden (4) sind, umfaßt, wobei der Zünder (2), das Mittel (3) zur Erzeugung eines Gases und das Behandlungsmittel (5) zwischen den explosionssicheren Platten (1) angeordnet sind.

5. Verfahren zur Sanierung eines mit einem Kontaminant verunreinigten Bodens, das die nachstehenden Schritte umfaßt:
Bereitstellung einer Verbindung (3) zur Erzeugung eines Gases, die von einem Behandlungsmittel (5) umgeben ist, das einen verfestigtes Mikroorganismus umfaßt, der in der Lage ist, den Kontaminant abzubauen, wobei der Mikroorganismus alleine oder in Verbindung mit einem verfestigten Nährstoff für den Mikroorganismus, der in der Lage ist, den Kontaminant abzubauen, zur Verfügung gestellt wird, und die Verbindung zur Erzeugung eines Gases einen Explosivstoff als Zünder enthält, der in der Verbindung zur Erzeugung eines Gases so eingebettet ist, daß er nicht in direktem Kontakt zu dem verfestigten Behandlungsmittel steht;
Freisetzung eines Gases aus dem Mittel zur Erzeugung eines Gases mittels Zündens des Explosivstoffes und Verteilens des verfestigten Behandlungsmittels im Boden; und
Abbau des Kontaminants mit dem Mikroorganismus, wobei das Mittel (3) zur Erzeugung eines Gases eine Verbrennungstemperatur von ca. 176 °C (350 °F) aufweist und das Mittel zur Erzeugung eines Gases ein Metallazid und ein Oxidationsmittel, wobei das Metallazid aus der Gruppe ausgewählt ist, die aus Alkalimetallaziden, Erdalkalimetallaziden und Aluminiumazid besteht, und das Oxidationsmittel aus der Gruppe ausgewählt ist, die aus Fe₂O₃, NiO₂ und CuO besteht, oder Azidocarbonamid und ein Salz einer Sauerstoffhalogensäure umfaßt, das aus der Gruppe ausgewählt ist, die aus Kaliumchlorat, Natriumchlorat, Kaliumbromat und Natriumbromat besteht, wobei der Mikroorganismus nach der Verteilung lebensfähig zurückbleibt.

6. Verfahren zur Bodensanierung nach Anspruch 5, in dem der Kontaminant ein Phenol ist.

7. Verfahren zur Bodensanierung nach Anspruch 5, in dem der Kontaminant eine Organochlorverbindung ist.

8. Verfahren zur Bodensanierung nach Anspruch 7, in dem die Organochlorverbindung Trichlorethylen ist.

9. Vorrichtung zur Verteilung eines Behandlungsmittels in einem Boden, das die nachstehenden Bestandteile umfaßt: ein Paar explosionssicherer Platten (1) und, zwischen den Platten angeordnet, einen Explosivstoff als Zünder (2) und ein Mittel (3) zur Erzeugung eines Gases, das mit einem Behandlungsmittel (5) überzogen , das einen Mikroorganismus oder einen Mikroorganismus in Kombination mit einem Nährstoff für ihn umfaßt, wobei:
das Behandlungsmittel (5) in verfestigter Form vorliegt und der Zünder (2) so in dem Mittel (3) zur Erzeugung eines Gases angeordnet ist, daß er nicht in direktem Kontakt mit dem Behandlungsmittel (5) steht; wobei das Mittel (3) zur Erzeugung eines Gases eine Verbrennungstemperatur von ca. 176 °C (350 °F) aufweist und das Mittel (3) zur Erzeugung eines Gases ein Metallazid und ein Oxidationsmittel, wobei das Metallazid aus der Gruppe ausgewählt ist, die aus Alkalimetallaziden, Erdalkalimetallaziden und Aluminiumazid besteht, und das Oxidationsmittel aus der Gruppe ausgewählt ist, die aus Fe₂O₃, NiO₂ und CuO besteht, oder Azidocarbonamid und ein Salz einer Sauerstoffhalogensäure umfaßt, das aus der Gruppe ausgewählt ist, die aus Kaliumchlorat, Natriumchlorat, Kaliumbromat und Natriumbromat besteht.

## Revendications

1. Procédé pour faire diffuser dans un sol un agent de traitement (5) comprenant un micro-organisme ou un micro-organisme en association avec une substance nutritive pour ce micro-organisme, ledit procédé comprenant les étapes consistant :
à utiliser un élément de diffusion (1-6) comprenant un explosif comme agent d'amorçage (2) et un agent de production de gaz (3) revêtu avec ledit agent de traitement, ledit agent de traitement étant sous une forme solidifiée, ledit agent d'amorçage étant présent dans ledit agent de production de gaz de manière à ne pas entrer directement en contact avec ledit agent de traitement solidifié (5) ;
à émettre un gaz à partir dudit agent de production de gaz (3) par inflammation de l'agent d'amorçage (2), et
à faire diffuser ledit agent de traitement solidifié (5) dans le sol, ledit agent de production de gaz (3) ayant une température de combustion proche de 176°C (350°F), et ledit agent de production de gaz (3) comprenant un azoture métallique et un agent oxydant, ledit azoture métallique étant choisi dans le groupe consistant en des azotures de métaux alcalins, des azotures de métaux alcalino-terreux et l'azoture d'aluminium, et l'agent oxydant étant choisi dans le groupe consistant en Fe₂O₃, NiO₂ et CuO, ou un azidocarbonamide et un sel d'acide oxyhalogéné choisi dans le groupe consistant en le chlorate de potassium, le chlorate de sodium, le bromate de potassium, le bromate de sodium, ledit micro-organisme restant viable après ladite diffusion.

2. Procédé suivant la revendication 1, dans lequel l'agent de traitement (5) est un agent de traitement qui a été solidifié par gélification.

3. Procédé suivant la revendication 1, dans lequel l'agent de traitement (5) est un agent de traitement qui a été solidifié par mélange à une argile.

4. Procédé suivant la revendication 1, dans lequel l'élément de diffusion comprend une paire de plaques à l'épreuve des explosions (1) qui sont liées (4) l'une à l'autre, l'agent d'amorçage (2), l'agent de production de gaz (3) et l'agent de traitement (5) étant disposés entre lesdites plaques à l'épreuve des explosions (1).

5. Procédé pour régénérer un sol contaminé par un contaminant, comprenant les étapes consistant :
à prendre un composé de production de gaz (3) entouré par un agent de traitement (5) comprenant un micro-organisme solidifié capable de dégrader le contaminant, micro-organisme qui est présent seul ou en association avec une substance nutritive solidifiée pour ledit micro-organisme capable de dégrader le contaminant, ledit composé de production de gaz contenant un explosif comme agent d'amorçage qui est noyé dans ledit composé de production de gaz de manière à ne pas entrer directement en contact avec ledit agent de traitement solidifié ;
à faire dégager un gaz à partir dudit agent de production de gaz par inflammation dudit explosif et à faire diffuser ledit agent de traitement solidifié dans le sol ; et
à dégrader le contaminant au moyen dudit micro-organisme,
dans lequel ledit agent de production de gaz (3) a une température de combustion proche de 176°C (350°F), et ledit agent de production de gaz comprend un azoture métallique et un agent oxydant, ledit azoture métallique étant choisi dans le groupe consistant en des azotures de métaux alcalins, des azotures de métaux alcalino-terreux et l'azoture d'aluminium, et l'agent oxydant étant choisi dans le groupe consistant en Fe₂O₃, NiO₂ et CuO, ou un azidocarbonamide et un sel d'acide oxyhalogéné choisi dans le groupe consistant en le chlorate de potassium, le chlorate de sodium, le bromate de potassium et le bromate de sodium, ledit micro-organisme restant viable après ladite diffusion.

6. Procédé pour régénérer un sol suivant la revendication 5, dans lequel le contaminant est le phénol.

7. Procédé pour régénérer un sol suivant la revendication 5, dans lequel le contaminant est un composé organochloré.

8. Procédé pour régénérer un sol suivant la revendication 7, dans lequel le composé organochloré est le trichloréthylène.

9. Appareil pour faire diffuser un agent de traitement dans un sol, comprenant une paire de plaques à l'épreuve des explosions (1) et, présent entre ces plaques, un explosif servant d'agent d'amorçage (2) et un agent de production de gaz (3) revêtu avec un agent de traitement (5) comprenant un micro-organisme ou un micro-organisme en association avec une substance nutritive pour ce micro-organisme, dans lequel :
ledit agent de traitement (5) est sous une forme solidifiée, et l'agent d'amorçage (2) est présent dans l'agent de production de gaz (3) de manière à ne pas entrer directement en contact avec l'agent de traitement (5), l'agent de production de gaz (3) ayant une température de combustion d'environ 176°C (350°F), et l'agent de production de gaz (3) comprenant un azoture métallique et un agent oxydant, l'azoture métallique étant choisi dans le groupe consistant en des azotures de métaux alcalins, des azotures de métaux alcalino-terreux et l'azoture d'aluminium, et l'agent oxydant étant choisi dans le groupe consistant en Fe₂O₃, NiO₂ et CuO, ou un azidocarbonamide et un sel d'acide oxyhalogéné choisi dans le groupe consistant en le chlorate de potassium, le chlorate de sodium, le bromate de potassium et le bromate de sodium.
